# EUROPEAN PATENT APPLICATION

(11) **EP 2 785 015 A1**
(43) Date of publication of application: **01.10.2014**
(21) Application number: 13305369.4
(22) Date of filing: 26.03.2013
(51) Int. Cl.: H04L 29/08

(54) **Monitoring Interactions with Audiovisual Content**

(71) Applicant: ALCATEL LUCENT, 92100 Boulogne-Billancourt (FR)
(72) Inventor: Kanoun, Wael, 75014 Paris (FR); Papillon, Serge, 75014 Paris (FR)
(74) Representative: ALU Antw Patent Attorneys

(57) **Abstract**

Embodiments of the invention relates to a method for monitoring interactions with audiovisual content, performed by a monitoring device (2, 7). The method allows storing interaction data in an interaction database (23), which reflects user's interactions with commercials of a commercial campaign. The method also allows building the profile of a household, and selecting commercial to be streamed in function of the profile.

## Description

### FIELD OF THE INVENTION

The present invention relates to the field of audiovisual content distribution.

### BACKGROUND

A user may interact with audiovisual content of an IPTV service in various manners. A first type of interaction is directly related to the IPTV service: The user may change channel before the end of the content, watch the content until its end, activate an interactive item associated with the content... A second type of interaction is not directly related to the IPTV service: The user may use an Internet connection to exchange information related to the content, for example on a web search engine, a social network, a chat application...

Monitoring such interactions may be useful, in particular in the case of commercial contents. However, no solution exists for monitoring both types of interaction.

### SUMMARY

It is thus an object of embodiments of the present invention to propose a monitoring method and a monitoring device, which do not show the inherent shortcomings of the prior art.

Accordingly, embodiments of the present invention relates to a method for monitoring interactions with audiovisual content, performed by a monitoring device, comprising:
- detecting a predetermined keyword in a packet stream transmitted by a residential gateway, and
- in response to the detection of said keyword:
   - determining a identifier of a content currently or recently transmitted in an audiovisual stream received by said residential gateway, and
   - sending a notification message including said identifier and said keyword.

The predetermined keyword may be detected in an IP payload of an IP packet comprising an IP header and said IP payload.

The IP packet may be a packet of an egress stream of said packet stream, transmitted from said residential gateway to an Internet server.

In an embodiment, the monitoring device is the residential gateway, and is connected to a display device for displaying the audiovisual stream.

The method may comprise determining additional data related to the context of use of said keyword, said notification message including said additional data.

The additional data may comprise data specifying an application of use of the keyword and/or data specifying a type of intention of use of the keyword, said type of intention being determined by a semantic analysis.

The method may comprise:
- detecting an interaction with content in function of said audiovisual stream and/or of commands sent from the residential gateway, and
- sending another notification message including an identifier of said content and the type of interaction detected.

The method may comprise storing said notification message and said other notification message in an interaction database.

The method may comprise sending said notification message to a profile manager module.

The method may comprise receiving a campaign identifier and a list of keywords associated with said campaign identifier in metadata of the audiovisual stream, said predetermined keyword being included in said list.

Embodiments of the invention also relates to a monitoring device for monitoring interactions with audiovisual content, comprising:
- means for detecting a predetermined keyword in a packet stream transmitted by a residential gateway, and
- means, activated in response to the detection of said keyword, for:
   - determining a identifier of a content currently or recently transmitted in an audiovisual stream received by said residential gateway, and
   - sending a notification message including said identifier and said keyword.

Embodiments of the invention also relates to a system comprising said monitoring device, a profile manager module for determining a user profile in function of said notification message, and a content selector module for selecting content to be streamed in function of said user profile.

Embodiment of the invention also relates to a system comprising a monitoring device and an interaction database, wherein the monitoring device comprises:
- means for detecting an interaction with content in function of said audiovisual stream and/or of commands sent from the residential gateway, and
- means for sending another notification message including an identifier of said content and the type of interaction detected,
wherein said interaction database stores said notification message and said other notification message.

Embodiments of the invention also provide a computer program comprising instructions for performing the method of monitoring mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 shows a system wherein a method of monitoring according to an embodiment of the invention is used,
Figure 2 is a structural view of a monitoring device of the system of figure 1, and,
Figures 3, 4 and 5 are flowcharts of a monitoring method executed by the monitoring device of figure 2.

### DESCRIPTION OF EMBODIMENTS

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

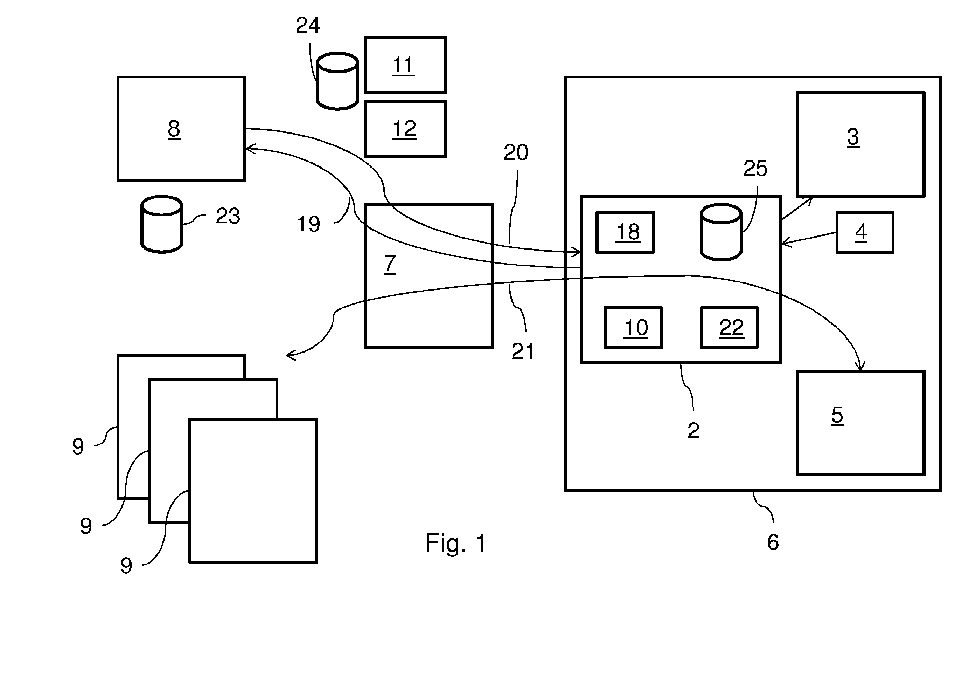

**Figure 1** shows a system 1 wherein a method for monitoring interactions with audiovisual content may be used.

In this embodiment, the system 1 comprises a residential gateway 2, a display device 3, a remote control 4 and a user terminal 5 located in a user's premises 6. The residential gateway 2 is for example a Set Top Box (STB) and allows accessing an IPTV service and an IP network through an operator's network. The display device 3 is for example a television connected to the residential gateway 2 for displaying the audiovisual content received through the IPTV service. The remote control 4 allows controlling the residential gateway 2, for example for requesting a channel change, entering a menu, selecting an item... Finally, the user terminal 5 is for example a laptop, a Smartphone, a tablet... which can offer various applications involving access to the IP network, such as an Internet browser, a chat application, a social network application...

In another embodiment, the display device 3 and the user terminal 5 may be combined in a unique device, for example a smart TV, able to display audiovisual content of the IPTV service and executing applications with IP connectivity. Also, instead of using a specific remote control 4, a user may control the residential gateway 2 with his user terminal 5. Finally, a plurality of user terminals 5 may be connected to the residential gateway 2, for example one for each family member of a household.

The system 1 also comprises a communication equipment 7, an audiovisual server 8, various Internet servers 9, a profile manager module 11, a commercial selector module 12, an interaction database 23 and a profile database 24.

The audiovisual server 8 provides an IPTV stream 20 to the residential gateway 2. The IPTV stream 20 may correspond to a TV channel transmitted simultaneously to a large number of users, a personalized channel containing audiovisual content selected in function of a user's profile, a Video-On-Demand content selected by a user... The IPTV stream 20 contains non-commercial contents (such as information programs, movies...) and commercial contents. The IPTV stream 20 also contains metadata associated with the transmitted contents, such as content ID, start and end time, content name...

The IPTV stream 20 transmitted from the audiovisual server 8 to the residential gateway 2 depends on commands 19 sent from the residential gateway 2 to the audiovisual server 8. For example, the commands 19 may include a channel change request, a request for a selected content of a Video-On-Demand service...

The interaction database 23 stores information regarding the user's interactions with the content of the IPTV stream 20.The Internet servers 9 offer various services through an IP network, such as website, social network, chat service... An IP packet stream 21 is exchanged between the Internet servers 9 and the user terminal 5, through the communication equipment 7 and the residential gateway 2. From the point of view of the residential gateway 2, the IP packet stream 21 comprises an Egress stream (IP packets sent to the Internet servers 9) and an Ingress stream (IP packets received from the Internet servers 9).

The profile manager module 11 and the commercial selector module 12 are functional modules, which may correspond to a combination of software and/or hardware in the system 1. They may be located on various devices in the system 1 and their functions will be described hereafter.

Finally, the communication equipment 7 may be any device in the operator's network through which pass the IPTV stream 20, the commands 19 and the IP packet stream 21, for example an access equipment of the operator's network.

When a user watches audiovisual content of the IPTV stream 20 on the display device 3, he may interact with the displayed content. A first type of interaction is directly related to the IPTV service: changing channel before the end of content, activating an interactive item of the IPTV steam 20 (such as entering a menu), watching content completely, requesting the recording of content... Interactions of the first type will be reflected on the IPTV stream 20 and/or on the commands 19. A second type of interaction is not directly related to the IPTV service: Performing an Internet search related to the content in an Internet browser of the user terminal 5, publishing something related to the content on a social network through an application of the terminal 5... Interaction of the second type will be reflected in the IP packet stream 21, in particular in the Egress stream of the IP packet stream 21.

The system 1 allows monitoring both types of interaction, in particular for commercial content. Indeed, as can be seen from figure 1, the residential gateway 2 and the communication equipment 7 have access to each of the IPTV stream 20, the commands 19 and the IP packet stream 21. Thus, one of the residential gateway 2 and the communication equipment 7 may be a monitoring device capable of monitoring both types of interactions.

Description will be continued with reference to the monitoring of interactions with commercial contents. However, in an alternative embodiment, interaction with different types of content may be monitored. More generally, the IPTV stream 20 may include metadata specifying a type of content (for example, commercial type or non-commercial type), and the interaction with one specific type of content are monitored.

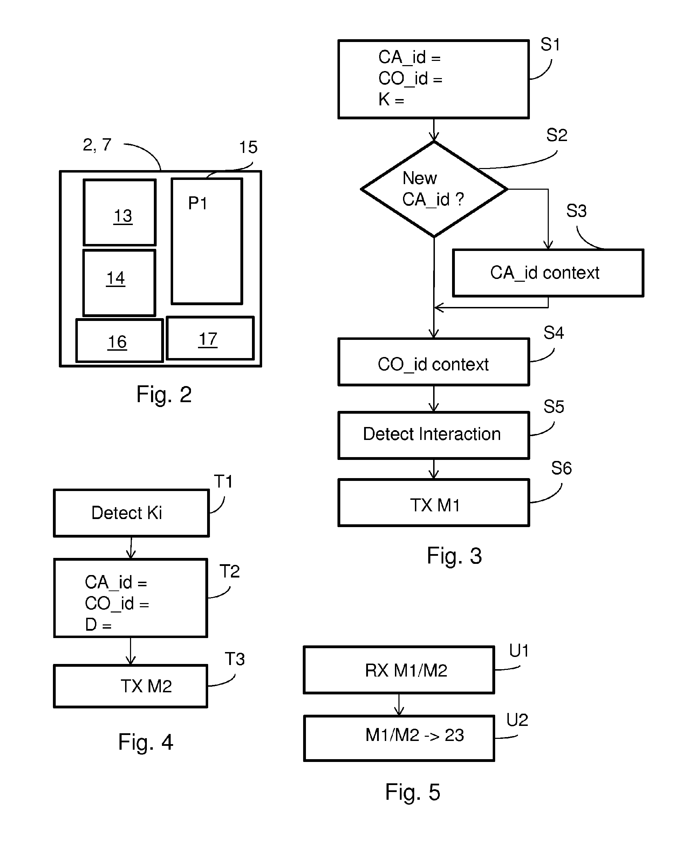

**Figure 2** is a structural view of a monitoring device for monitoring interactions with audiovisual content, which may be the residential gateway 2 or the communication equipment 7. As explained previously, the monitoring device (whether it is the residential gateway 2 or the communication equipment 7) has access to the IPTV stream 20, the commands 19 and the IP packet stream 21.

The monitoring device of figure 2 has the material architecture of a computer and comprises a processor 13, a volatile memory 14, a non-volatile memory 15, a first communication interface 16 and a second communication interface 17.

The processor 13 allows executing computer programs stored in the non-volatile memory 15, using the volatile memory 14 as working space.

The non-volatile memory 15 comprises a computer program P1, the execution of which implements a content handler module 18, a keyword detector module 22 and an interaction module 10 on the monitoring device. Figure 1 shows the content handler module 18, the keyword detector module 22 and the interaction module 10 in the residential gateway 2. However, as explained before, the content handler module 18, the keyword detector module 22 and the interaction module 10 may be located in the communication equipment 7.

In the case of the residential gateway 2, the first communication interface 16 allows communication with the operator's network, and the second communication interface 17 allows local communication with the display device 3, the remote control 4 and the user terminal 5. For example, the first communication interface 16 comprises a DSL interface and the second communication interface 17 comprises a HDMI connector, an infra-red receiver and a Wi-Fi transceiver.

In the case of the communication equipment 7, the first communication interface 16 allows communication with the audiovisual server 8 and the Internet servers 9, and the second communication interface 17 allows communication with the residential gateway 2.

**Figure 3** is a flowchart of a method executed by the monitoring device of figure 2, corresponding to the functions of the content handler module 18.

The content handler module 18 monitors the IPTV stream 20 for detecting commercial contents and keeping track of the commercials that have been streamed. Furthermore, the content handler module 18 monitors the IPTV stream 20 and the commands 19 for assessing the interactions of a user directly related to the IPTV service (first type of interaction mentioned before).

Thus, at step S1, the content handler module 18 detects a commercial content in the IPTV stream 20 and determines the following data:
- CA_id: A campaign identifier for identifying a campaign to which the commercial content belongs,
- CO_id: A commercial identifier for identifying the commercial,
- K = {K1, K2, K3...}: A set of keywords associated with the campaign CA_id.

For example, CA_id, CO_id and K may be included in metadata of the commercial content in the IPTV stream 20. In a variant, the metadata do not include commercial identifier and CO_id is assigned by the content handler module 18.

Then, the content handler module 18 determines whether it is the first time a commercial of the campaign CA_id is received (Step S2).

If it is the first time that a commercial of the commercial campaign CA_id is received, then the content handler module 18 creates a commercial campaign context in a commercial database 25 associated with the content handler module 18 (step S3). The commercial campaign context includes the commercial campaign identifier CA_id, the set K of keywords associated with that commercial campaign, and a "current commercial pointer" that initially is set to void. Furthermore, the content handler module 18 updates a lookup table associating each keyword with one or more commercial campaign identifier.

Then, after step S3 (if it is the first time that a commercial of the commercial campaign CA_id is received) or after step S2 (in the other case), the content handler module 18 creates a commercial context for the commercial CO_id in the commercial database 25 (Step S4). The commercial context comprises the commercial identifier CO_id, a link to the corresponding commercial campaign context, and additional data related to the diffusion of the commercial, for example the channel on which it has been broadcasted and the time of diffusion. Furthermore, the « current commercial pointer » of the commercial campaign context is set to the commercial CO_id. Finally, a timer is set and at the end of it the "current commercial pointer" will be set to void.

Then, the content handler module 18 detects an interaction with the commercial CO_id (step S5). As explained before, the interaction may be for example watching the commercial until its end, changing channel before the end of the commercial, or activating an interactive item associated with the commercial, for example for entering a menu.

Then, the content handler module 18 sends a notification message M1 to the interaction module 10 (step S6). The notification message M1 comprises the commercial identifier CO_id and the type of interaction detected at step S5. The notification message M1 may also comprise the commercial campaign identifier CA_id and/or the additional data related to the diffusion of the commercial such as the channel on which it has been broadcasted and the time of diffusion.

Processing of the notification message M1 by the interaction module 10 will be described with reference to figure 5.

**Figure 4** is a flowchart of a method executed by the monitoring device of figure 2, corresponding to the functions of the keyword detector 22.

The keyword detector 22 monitors the IP packet stream 21 for the keywords of the lookup table maintained by the content handler module 18, based on a Deep Packet Inspection process. In other words, when the monitoring device receives an IP packet of the IP stream 21, comprising an IP header and an IP payload, the keyword detector 22 looks for the predetermined keywords specified by the lookup table in the IP payload. Preferably, the keyword detector 22 monitors only the Egress stream of the IP packet stream 21 (thus not the Ingress stream). This ensures that the detected keywords really relates to interactions performed by the user.

In the method of figure 4, a keyword Ki included in the lookup table is detected by the keyword detector (step T1).

In response to the detection of step T1, the keyword detector 22 determines the content ID of the commercial currently being stream or recently streamed (step T2). In this embodiment, the keyword detector 22 uses the lookup table managed by the content handler module 18 to find the commercial campaign contexts associated with the keyword Ki. From these contexts, the keyword detector 22 retrieves the "current commercial pointer".

If the "current commercial pointer" of one commercial campaign context is void, it means that no commercial of this commercial campaign has been stream recently, and no entry will be made for this particular commercial campaign. On the other hand, if the "current commercial pointer" of one commercial campaign context is not void, it means that a commercial of that campaign is currently streaming, or has recently been streamed such that the above-mentioned timer has not expired yet. The "current commercial pointer" allows determining the corresponding content identifier CO_id. Thus, "recently streamed" means here that the content started streaming less than a predetermined duration ago.

The keyword detector 22 may also determine additional data D related to the context of use of the keyword. For example, the Deep Packet Inspection allows determining in which activity (the application used, the intention behind the use) it has been expressed. The application may be for example an Instant Messaging application, a search engine, a social network application, and may be detected in function of the IP payload. The intention behind the use of the keyword may be detected by a semantic stage. The intent determined by the semantic stage may be for example search for information, praise, or exchange with friends. The semantic stage can also be used to qualify the context of use of the keyword and measure whether the use of the keyword relates to the commercial or not.

Then, the keywords detector 22 sends a notification message M2 to the interaction module 10 and to the profile manager module 11 (step T3). The message M2 comprises the keyword Ki detected at step S1, a list of one or more commercial identifiers CO_id determined at step T2, and may also comprises the additional data D determined at step T2.

When a commercial campaign is over, the keywords associated with this commercial campaign are removed from the lookup table maintained by the content handler module 18. A commercial campaign being over may be detected by the monitoring device in various manners. For example, a specific signal may be included in the meta-data of the IPTV stream 20. Also, the commercial campaign may be considered over when no commercial of that campaign has been received for a predetermined duration.

**Figure 5** is a flowchart of a method executed by the monitoring device of figure 2, corresponding to the functions of the interaction module 10.

The interaction module 10 receives notification messages M1 from the content handler module 18 and notification messages M2 from the keyword detector 22. When the interaction measure module 10 receives a notification message M1 or M2 (step U1), it stores it with a timestamp in the interaction database 23 (Step U2). The interaction database 23 may be a database located in the operator's network, for example associated with the IPTV server 8. Thus, storing a notification message M1 or M2 in the interaction database 23 comprise sending the notification message from the interaction module 10 of the monitoring device to the interaction database 23.

As explained before, the notification messages M1 and M2 represent the interaction of a user with a commercial content. Thus, a first role of the interaction module 10 is to store the interaction information concerning a commercial in the interaction database 23. That means:
1) information of a notification message M1 coming from the content handler module 18. This is for example information concerning the fact that the commercial has been broadcasted until its end (no change of channel) and/or any direct interaction with the add itself.
2) information of a notification message M2 coming from the keyword detector 22. This information specifies the use of a keyword related to the commercial and potentially its context of use (social network, chat, internet search, etc...) or the application used.

Although figure 1 shows only one residential gateway 2, the system 1 may comprises a plurality of residential gateways located in respective user's premises. In that case, the interaction database 23 receives and stores notification messages M1 and M2 related to the various residential gateways. A notification messages M1 or M2 may be stored with a user identifier or a residential gateway identifier.

From the content of the interaction database 23, it is possible to propose a data retrieval interface that enables a campaign manager to get all the data related to one commercial campaign in order to analyze it and produce scores and dashboards in order to capture a level of success for the commercial campaign. The system 1 allows measuring the success of a commercial campaign though the interactions it produces and enabling lots of classic correlation operations (temporal analysis, spatial analysis, correlation on the nature of the reactions, time to react, research some hysteresis associated with external events, differentiation of the keywords associated with the campaign). The commercial interaction database 23 has records of interaction per commercial for the whole campaign.

Thus, the monitoring device having the functions of the content handler module 18, the keyword detector module 22 and the interaction module 10 enables, by detecting interactions and storing them in the interaction database 23, conducting and deriving analysis relevant for advertisers to assess and evaluate the performance of their advertisement campaigns. Indeed, using the data stored in the interaction database 23, it is possible to derive plots, charts and metrics which provide key performance indicators for a campaign. Such knowledge offers a powerful tool for the advertisement industry to establish dashboards, adapt and enhance their campaigns. A non-exhaustive list includes:
a. Level of interactions during a campaign (∼success) with respect to different geographic zones
b. Level of interactions with respect to different time of the day, day of the weeks, etc.
c. Level of interactions with respect to the profiles of each household, i.e. setup box: marital status, ages, sex, number of children...
d. Relevance of a keyword in the overall campaign. If we consider the example of a campaign for a product in which features a famous actor, the interaction measure module 10 enables determining whether keywords related to the product are more used than the actor's name. In other words, it allows determining whether the audience is overly influenced by the actor at the expense of the brand.

The various functions of the monitoring device of figure 2 have been described as performed by a content handler module 18, a keyword detector 22 and an interaction module 10. However, this is only an example of a combined hardware/software architecture for performing these functions.

The profile manager module 11 receives notification messages M2 from the keyword detector 22. The profile manager module 11 determines a user profile in function of the received notification messages M2. The user profile is stored in the profile database 24. Note that the user profile is associated with a particular residential gateway 2, i.e. a household, and not to individual members of the household.

Thus, the profile manager module 11 may trace the keywords associated with commercials and memorize the interactions that the keyword induced. In the case of enhanced analysis by the keyword detector 22, the profile manager module 11 may store the context and the intent of the reaction. New keywords and their associated interaction measures are captured by this module whenever the keyword detector 22 sends a notification message M2. The profile manager module 11 builds a profile of the household based on all the keywords and associated reactions.

In an embodiment, the keywords are associated in categories, based on a semantic analysis. For example, a category may include keywords related with sport, and another category may include keywords related with travel... The profile manager module 11 determines whether the interactions induced by the keywords of a category are homogenous. If not, the profile manager module 11 will redefine the categories. This allows determining the interests of the household.

The categories may be associated with a temporal dimension (or time range). For example, there may be a category (sport, evening) and a category (cartoons, morning). This may allow differentiating between different users of a household.

The profile managed by the profile manager module 11 allows selecting appropriate commercial. Indeed, the commercial selector module 12 is configured for selecting a commercial to be streamed in the IPTV stream 20 in function of the profile of the a household. For example, the commercial selector module 12 uses the categories and associated interactions, as determined by the profile manager module 11, to create an commercial pertinence evaluation metric of a group of keywords. Given a group of keywords associated with a commercial, this metric will evaluate the odds of a positive strong reaction of the household (taking into account the time of day, in case the categories are associated with a temporal dimension). This metric may be determined by associating a keyword of the group to one or more semantically near keyword of the categories, and correlate their reactions.

In an embodiment, the profile manager module 11, the profile database 24 and the commercial selector module 12 are located in a server in the network (thus not in user's premises 6) and manage profiles and commercial selection for a plurality of residential gateways.

In another embodiment, the profile manager module 11, the profile database 24 and the commercial selector module 12 are located in the residential gateway 2. This allows a privacy preserving choice of commercial: A content provider may send to residential gateway 2 a group of commercials and their associated keywords. Building of the user profile and selecting one of the commercial is then performed locally for the household, not giving to the content provider any hint.

In the system 1, the keyword detector module 22 sends the notification message M2 to both the interaction module 10 and the profile manager module 11. This allows both data analysis regarding a commercial campaign (functions of interaction module 10 and interaction database 23) and profile management and commercial selection (functions of the profile management module 11, commercial selection module 12 and profile database 24). In another embodiment, the system 1 provides only one of the two mentioned function. Thus, the keyword detector module 22 may send the notification message M2 to only one of the interaction module 10 and the profile manager module 11. The system 1 may not comprise the interaction module 10 and interaction database 23 or the profile management module 11, the commercial selection module 12 and the profile database 24.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for monitoring interactions with audiovisual content, performed by a monitoring device (2, 7), comprising:
- detecting (T1) a predetermined keyword (Ki) in a packet stream (21) transmitted by a residential gateway (2), and
- in response to the detection of said keyword:
- determining (T2) a identifier (CO_id) of a content currently or recently transmitted in an audiovisual stream (20) received by said residential gateway (2), and
- sending (T3, U2) a notification message (M2) including said identifier and said keyword.

2. Method according to claim 1, wherein said predetermined keyword (Ki) is detected in an IP payload of an IP packet comprising an IP header and said IP payload.

3. Method according to claim 2, wherein said IP packet is a packet of an egress stream of said packet stream (21), transmitted from said residential gateway (2) to an Internet server (9).

4. Method according to one of claims 1 to 3, wherein said monitoring device is said residential gateway (2), and is connected to a display device (3) for displaying the audiovisual stream (20).

5. Method according to one of claims 1 to 4, comprising determining (T2) additional data (D) related to the context of use of said keyword (Ki), said notification message (M2) including said additional data (D).

6. Method according to claim 5, wherein said additional data comprise data specifying an application of use of the keyword (Ki) and/or data specifying a type of intention of use of the keyword (Ki), said type of intention being determined by a semantic analysis.

7. Method according to one of claims 1 to 6, comprising:
- detecting (S5) an interaction with content in function of said audiovisual stream (20) and/or of commands (19) sent from the residential gateway (2), and
- sending (S6, U2) another notification message (M1) including an identifier of said content (CO_id) and the type of interaction detected.

8. Method according to claim 7, comprising storing said notification message (M2) and said other notification message (M1) in an interaction database (23).

9. Method according to claim 8, comprising sending said notification message (M2) to a profile manager module (11).

10. Method according to one of claims 1 to 9, comprising receiving (S1) a campaign identifier (CA_ID) and a list (K) of keywords associated with said campaign identifier (CA_ID) in metadata of the audiovisual stream (21), said predetermined keyword (Ki) being included in said list (K).

11. Computer program comprising instructions for performing the method of one of claims 1 to 10 when said instructions are executed by a computer.

12. Monitoring device (2, 7) for monitoring interactions with audiovisual content, comprising:
- means for detecting a predetermined keyword (Ki) in a packet stream (21) transmitted by a residential gateway (2), and
- means, activated in response to the detection of said keyword, for:
- determining (T2) a identifier (CO_id) of a content currently or recently transmitted in an audiovisual stream (20) received by said residential gateway (2), and
- sending (T3, U2) a notification message (M2) including said identifier and said keyword.

13. System (1) comprising a monitoring device (2, 7) according to claim 12, a profile manager module (11) for determining a user profile in function of said notification message (M2), and a content selector module (12) for selecting content to be streamed in function of said user profile.

14. System (1) comprising a monitoring device (2, 7) according to claim 12 and an interaction database (23), wherein the monitoring device (2, 7) comprises:
- means for detecting an interaction with content in function of said audiovisual stream (20) and/or of commands (19) sent from the residential gateway (2), and
- means for sending another notification message (M1) including an identifier of said content (CO_id) and the type of interaction detected,
wherein said interaction database (23) stores said notification message (M2) and said other notification message (M1).

## Amended claims

### Amended claims in accordance with Rule 137(2) EPC.

**1.** Method for monitoring interactions with audiovisual content, performed by a monitoring device (2, 7), comprising:
- detecting (T1) a predetermined keyword (Ki) in a packet stream (21) transmitted by a residential gateway (2), and
- in response to the detection of said keyword:
- determining (T2) a identifier (CO_id) of an audiovisual content currently or recently transmitted in an audiovisual stream (20) received by said residential gateway (2), and
- sending (T3, U2) a notification message (M2) including said identifier and said keyword.

**2.** Method according to claim 1, wherein said predetermined keyword (Ki) is detected in an IP payload of an IP packet comprising an IP header and said IP payload.

**3.** Method according to claim 2, wherein said IP packet is a packet of an egress stream of said packet stream (21), transmitted from said residential gateway (2) to an Internet server (9).

**4.** Method according to one of claims 1 to 3, wherein said monitoring device is said residential gateway (2), and is connected to a display device (3) for displaying the audiovisual stream (20).

**5.** Method according to one of claims 1 to 4, comprising determining (T2) additional data (D) related to the context of use of said keyword (Ki), said notification message (M2) including said additional data (D).

**6.** Method according to claim 5, wherein said additional data comprise data specifying an application of use of the keyword (Ki) and/or data specifying a type of intention of use of the keyword (Ki), said type of intention being determined by a semantic analysis.

**7.** Method according to one of claims 1 to 6, comprising:
- detecting (S5) an interaction with content in function of said audiovisual stream (20) and/or of commands (19) sent from the residential gateway (2), and
- sending (S6, U2) another notification message (M1) including an identifier of said content (CO_id) and the type of interaction detected.

**8.** Method according to claim 7, comprising storing said notification message (M2) and said other notification message (M1) in an interaction database (23).

**9.** Method according to claim 8, comprising sending said notification message (M2) to a profile manager module (11).

**10.** Method according to one of claims 1 to 9, comprising receiving (S1) a campaign identifier (CA_ID) and a list (K) of keywords associated with said campaign identifier (CA_ID) in metadata of the audiovisual stream (21), said predetermined keyword (Ki) being included in said list (K).

**11.** Computer program comprising instructions for performing the method of one of claims 1 to 10 when said instructions are executed by a computer.

**12.** Monitoring device (2, 7) for monitoring interactions with audiovisual content, comprising:
- means for detecting a predetermined keyword (Ki) in a packet stream (21) transmitted by a residential gateway (2), and
- means, activated in response to the detection of said keyword, for:
- determining (T2) a identifier (CO_id) of an audiovisual content currently or recently transmitted in an audiovisual stream (20) received by said residential gateway (2), and
- sending (T3, U2) a notification message (M2) including said identifier and said keyword.

**13.** System (1) comprising a monitoring device (2, 7) according to claim 12, a profile manager module (11) for determining a user profile in function of said notification message (M2), and a content selector module (12) for selecting content to be streamed in function of said user profile.

**14.** System (1) comprising a monitoring device (2, 7) according to claim 12 and an interaction database (23), wherein the monitoring device (2, 7) comprises:
- means for detecting an interaction with content in function of said audiovisual stream (20) and/or of commands (19) sent from the residential gateway (2), and
- means for sending another notification message (M1) including an identifier of said content (CO_id) and the type of interaction detected,
wherein said interaction database (23) stores said notification message (M2) and said other notification message (M1).
